# EUROPEAN PATENT SPECIFICATION

(11) **EP 2 830 476 B1**
(45) Date of publication and mention of the grant of the patent: **07.06.2023**
(21) Application number: 12713939.2
(22) Date of filing: 30.03.2012
(51) Int. Cl.: A47L 15/42, A47L 15/00

(54) **DISHWASHER AND METHOD OF OPERATING DISHWASHER**
GESCHIRRSPÜLMASCHINE UND VERFAHREN ZUM BETREIBEN DER GESCHIRRSPÜLMASCHINE
LAVE-VAISSELLE ET PROCÉDÉ DE FONCTIONNEMENT D'UN LAVE-VAISSELLE

(43) Date of publication of application: 04.02.2015
(73) Proprietor: Electrolux Home Products Corporation N.V., 1130 Brussels (BE)
(72) Inventor: DREOSSI, Giuseppe, S-10545 Stockholm (SE); KRISCHE, Berndt, S-10545 Stockholm (SE); OLSSON, Niklas, S-10545 Stockholm (SE)
(74) Representative: Electrolux Group Patents
(86) International application number: PCT/EP2012/055885
(87) International publication number: WO 2013/143619

(56) References cited:
- EP-A1- 2 327 349
- EP-A2- 0 669 097
- EP-A2- 1 142 527
- DE-A1- 4 243 605
- DE-A1-102008 030 538
- US-A1- 2007 267 048
- US-A1- 2010 229 900
- US-A1- 2011 155 179

## Description

### TECHNICAL FIELD

The present invention relates to a dishwasher and a method of operating a dishwasher.

### BACKGROUND

A dishwasher comprises a washing chamber in which for instance, dishes to be cleaned are placed. Washing liquid is sprayed into the washing chamber by means of a circulation pump for cleaning and/or rinsing the dishes. Washing liquid may be circulated in the dishwasher in different washing cycles. Thus, a dishwashing operation may comprise for instance, a prewashing cycle during which the dishes are cleaned with water only, a main washing cycle during which the dishes are cleaned with water and detergent, and a rinsing cycle during which the dishes are rinsed with water and a rinsing agent. Water admitted into the dishwasher may be softened, e.g. by means of an ion exchange resin.

WO 2009/027320 discloses a domestic dishwasher comprising a treatment chamber, in which items to be washed are supplied with washing liquid, and a reservoir that functions as a heat exchanger. The reservoir is in thermal contact with an outer wall of the dishwasher and in thermal contact with the treatment chamber. The reservoir is filled with fresh water by means of supply means. The water in the reservoir is pre-heated *inter alia* by means of heated washing liquid in the treatment chamber. The contents of the reservoir can be introduced via outlet lines into the treatment chamber. The dishwasher is equipped with recycling means that deliver washing liquid from the treatment chamber to the reservoir.

EP 0 669 097 A2 relates to a dishwashing machine, comprising an arrangement provided to reclaim the water used to carry out at least an operational step or phase of the process.

### SUMMARY

An object of the present invention is to provide an alternative dishwasher, wherein control of dishwater temperature is provided while water saving is achieved.

According to an aspect of the invention, the object is achieved by a dishwasher comprising a washing chamber with a sump and a circulation circuit. The circulation circuit comprises the sump, a circulation pump and a spraying device for spraying washing liquid into the washing chamber. The dishwasher further comprises a reservoir adapted to be connected to fresh water mains. A liquid connection is adapted to transfer liquid from the reservoir to the washing chamber. A return system is adapted to transfer liquid from the washing chamber to the reservoir. The reservoir is thermally insulated from the washing chamber.

Since the reservoir is thermally insulated from the washing chamber, a temperature of washing liquid in the washing chamber is not affected by a temperature of water in the reservoir. In other words, no heat exchange takes place between the washing chamber and the reservoir. Thus, a precise temperature control of the washing liquid may be achieved also if cold water is held in the reservoir. As a result, the above mentioned object is achieved.

In the washing chamber dishes to be cleaned may be placed. The dishes are cleaned and/or rinsed by washing liquid circulating in the circulation circuit. The spraying device may comprise one or more rotating arms. The washing liquid may be water, water with added detergent, or water with added rinsing agent. A dishwashing operation may comprise a number of different washing cycles. The different types of washing liquids may be used in different washing cycles. For instance, a first washing cycle may be performed using water only for rinsing the dishes and soaking dry residue on the dishes, and a second washing cycle may be performed with washing liquid in the form of water with added detergent. Washing liquid in the washing chamber may be drained completely from washing liquid between two washing cycles. Alternatively, the washing chamber is not drained between two washing cycles and the same washing liquid is used in a second washing cycle of the two washing cycles. In this case freshwater is added to the washing liquid in the second washing cycle. A further alternative may be a partial drain of washing liquid from the washing chamber between two washing cycles. In this case freshwater is added to the washing liquid in a second washing cycle of he two washing cycles. Freshwater admitted into the dishwasher from water mains may be softened, e.g. by flowing through a device comprising ion exchange resin. The term dishwashing operation herein is to be interpreted as washing one batch of dishes in the dishwasher. The term freshwater used herein refers to both water stemming directly from the water mains as well as water which has passed a water softening arrangement.

The reservoir may be in thermal communication with an ambient environment of the dishwasher. Thus, freshwater held in the reservoir may be warmed up by the ambient environment of the dishwasher.

According to embodiments, the reservoir is arranged adjacent to a wall portion of the washing chamber and a thermal insulation material may be arranged between the reservoir and the wall portion. In this manner thermal insulation of the reservoir from the washing chamber may be achieved.

According to embodiments, the dishwasher may comprise a heating element arranged in thermal communication with the circulation circuit. In this manner the temperature of circulating washing liquid may be raised to a desired or required level.

According to embodiments, the dishwasher may comprise a controller for controlling washing parameters of the dishwasher. The controller may be connected to the heating element and a temperature sensor for controlling a temperature of a washing liquid in the washing chamber. In this manner the temperature of circulating washing liquid may be controlled.

The controller may for instance control settings of one or more valves in the dishwasher.

The controller may control the circulation pump and possible further pumps in the dishwasher. The controller may control the length of the different washing cycles of the dishwasher. The controller may dose detergent and/or rinsing solution into water.

In the invention, the reservoir comprises two or more tanks arranged adjacent to one or more wall portions of the washing chamber. In this manner a sufficient reservoir volume may be achieved under circumstances where availability of space in the dishwasher does not permit installation of one tank comprising a sufficient volume. The two or more tanks may be interconnected.

According to embodiments, the return system may comprise the circulation pump. In this manner the circulation pump may be utilized for transferring washing liquid from the washing chamber to the reservoir.

According to embodiments, the return system may comprise a first conduit extending between the sump and the reservoir. In this manner the first conduit may be utilized for transferring washing liquid from the washing chamber to the reservoir. The circulation pump and/or one or more valves may be arranged in the first conduit.

According to embodiments, the dishwasher may be adapted to store washing liquid in the reservoir. In this manner washing liquid stored from a first dishwashing operation may be used in a first washing cycle of a following dishwashing operation.

According to embodiments, the dishwasher may be:
adapted to transfer washing liquid stored in the reservoir to the washing chamber,
adapted to utilize transferred washing liquid in a first washing cycle in the dishwasher,
adapted to tap freshwater from water mains into the reservoir,
adapted to transfer at least part of the freshwater from the reservoir to the washing chamber, and
adapted to utilize the said at least part of the freshwater in a following washing cycle following the first washing cycle. In this manner the reservoir may be rinsed through by freshwater. Residue of washing liquid may thus be removed from the reservoir between two dishwashing operations. A following washing cycle may be a washing cycle immediately following the first washing cycle, or it may be a later washing cycle, i.e. one or more washing cycles may be performed between the first washing cycle and the following washing cycle.

According to embodiments, the dishwasher may be:
adapted to repeat tapping freshwater from water mains into the reservoir and transferring the freshwater from the reservoir to the washing chamber, one or more times, and
adapted to utilize at least part of the freshwater in one or more further washing cycles. In this manner the reservoir may be thoroughly rinsed through by freshwater between two dishwashing operations.

According to a further aspect of the invention there is provided a method of operating a dishwasher according to claim 11.

### BRIEF DESCRIPTION OF THE DRAWINGS

The various aspects of the invention, including its particular features and advantages, will be readily understood from the following detailed description and the accompanying drawings, in which:
Figs. 1 and 2 illustrate schematically dishwashers according to embodiments, and
Fig. 3 illustrates a method of operating a dishwasher.

### DETAILED DESCRIPTION

The present invention will now be described more fully with reference to the accompanying drawings, in which example embodiments are shown. However, this invention should not be construed as limited to the embodiments set forth herein.

Disclosed features of example embodiments may be combined as readily understood by one of ordinary skill in the art to which this invention belongs. Like numbers refer to like elements throughout. Well-known functions or constructions will not necessarily be described in detail for brevity and/or clarity.

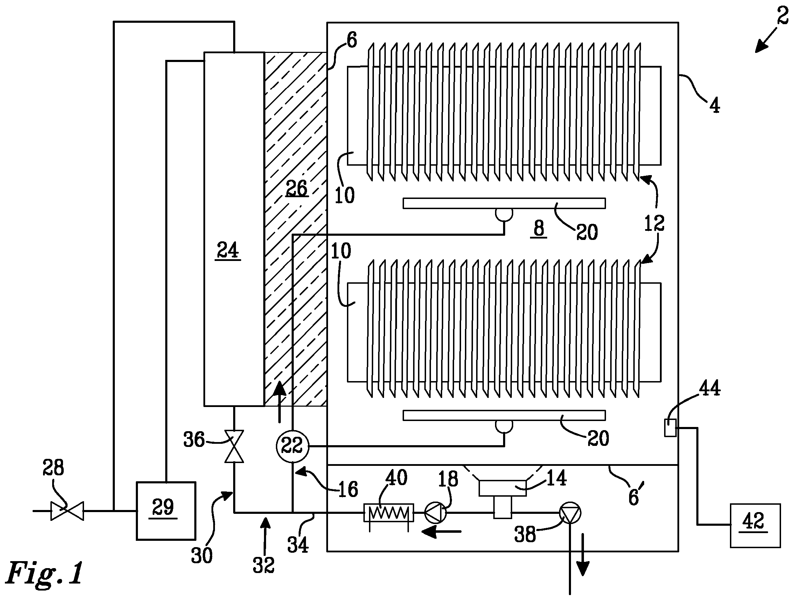

**Fig. 1** illustrates schematically a dishwasher 2 according to an example not forming part of the invention. The dishwasher comprises a housing **4** having wall portions **6, 6'.** The housing 4 comprises a washing chamber **8,** the wall portions 6, 6' at least partially defining the washing chamber 8. The dishwasher 2 is provided with a door (not shown) for closing the washing chamber 8 and racks **10** for supporting dishes **12** in the washing chamber 8. At a bottom portion of the washing chamber 8 there is arranged a sump **14.** The dishwasher 2 comprises a circulation circuit **16** for circulating washing liquid in the washing chamber 8. The circulation circuit 16 comprises the sump 14, a circulation pump **18,** two spraying devices **20** for spraying the washing liquid into the washing chamber 8, and conduits interconnecting the sump 14, the circulation pump 18, and the spraying devices 20. During dishwashing, washing liquid is circulated in the circulation circuit 16 by means of the circulation pump 18 and sprayed into the washing chamber 8 in directions towards the dishes 12 to clean the dishes 12. The washing liquid flows downwards in the washing chamber 8 into the sump 14 from which it is continuously pumped to one or both of the spraying devices 20. It may be held that also the washing chamber 8 forms part of the circulation circuit 16. A flow control device **22** may control the washing liquid directed to one or both of the two spraying devices 20. Purely as an example, it may be mentioned that about 2 - 5 liters of washing liquid may circulate in the circulation circuit 16.

The dishwasher 2 comprises a reservoir **24.** The reservoir 24 is arranged adjacent to one of the wall portions 6 forming part of a side wall of the washing chamber 8. A thermal insulation material **26** is arranged between the reservoir 24 and the wall portion 6. Thus, the reservoir 24 is thermally insulated from the washing chamber 8. The thermal insulation material may for instance comprise mineral wool and/or solid foam material. The reservoir 24 is connected to water mains via an inlet valve **28** of the dishwasher 2. Freshwater may thus be tapped into the reservoir 24 from water mains. Freshwater may pass via a water softening device **29** to the reservoir 24. Either a direct conduit form the inlet valve 28 to the reservoir 24 or a conduit via the water softening device 29 may be provided in the dishwasher 2. Alternatively, both options may controllably be provided in the dishwasher 2. A liquid connection **30** is adapted to transfer liquid from the reservoir 24 to the washing chamber 8.

A return system **32** is adapted to transfer liquid from the washing chamber 8 to the reservoir 24. The return system 32 comprises the circulation pump 18. Thus, the circulation pump 18 may be arranged to transfer washing liquid from the washing chamber 8 and its sump 14 to the reservoir 24. The return system 32 comprises a first conduit 34 extending between the sump 14 and the reservoir 24.

A first control valve 36 is provided in the liquid connection 30, the first conduit 34, and the return system 32. The first control valve 36 is closed when freshwater is tapped into the reservoir 24. The first control valve 36 is opened to transfer water from the reservoir 24 to the washing chamber 8 and the circulation circuit 16. The first control valve 36 is opened to transfer washing liquid from the washing chamber 8 to the reservoir 24. The first control valve 36 is closed to hold washing liquid in the reservoir 24. The first control valve 36 is opened to transfer washing liquid from the reservoir 24 to the washing chamber 8 and the circulation circuit 16. Liquid is disposed of from the washing chamber 8 via a drain comprising a drain pump **38** connected to the sump 14.

Accordingly, the dishwasher 2 is adapted to store washing liquid in the reservoir 24. For instance washing liquid from a final washing cycle of a dishwashing operation, i.e. rinsing liquid, may be stored in the reservoir 24. This washing liquid is then used in a first washing cycle of a following dishwashing operation.

A heating element **40** is arranged in thermal communication with the circulation circuit 16. The dishwasher 2 comprises a controller **42** for controlling washing parameters of the dishwasher 2. The controller 42 is connected to the heating element 40 and a temperature sensor **44** for controlling a temperature of a washing liquid circulating in the circulation circuit 16 and/or in the washing chamber 8. The controller 42 further may be connected to one or more of the inlet valve 28, the first control valve 36, the flow control device 22, the circulation pump 18, and the drain pump 38. Thus, the controller 42 may control a dishwashing operation of the dishwasher 2. A control panel (not shown) may further be connected to the controller 42 for a user of the dishwasher 2 to select e.g. a particular type of dishwashing operation or a particular temperature range for a dishwashing operation.

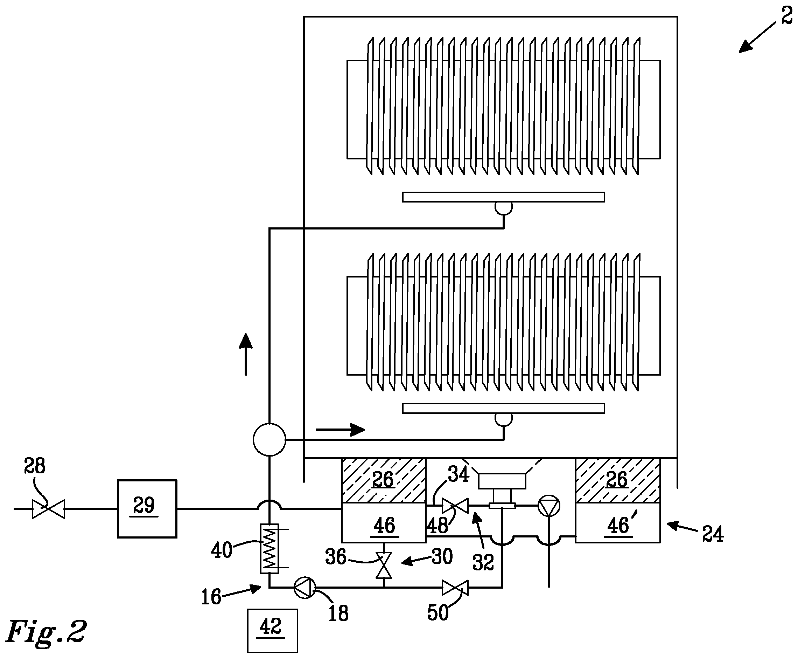

**Fig. 2** illustrates schematically a dishwasher 2 according to the invention.

The dishwasher 2 of these embodiments has several features in common with the embodiments illustrated in connection with Fig. 1. With reference to Fig. 2 the main differences to the Fig. 1 embodiments are discussed in the following.

During dishwashing, washing liquid is circulated in a circulation circuit 16 of the dishwasher 2 by means of a circulation pump 18. The washing liquid may be heated by means of a heating element 40 under the control of a controller 42.

The dishwasher 2 comprises a reservoir 24. The reservoir 24 comprises two tanks **46, 46'.** The tanks 46, 46' are arranged adjacent to one of the wall portions 6' forming part of a bottom wall of the washing chamber 8. A thermal insulation material 26 is arranged between the tanks 46, 46' and the wall portion 6'. The tanks 46, 46' and accordingly, the reservoir 24, are thermally insulated from the washing chamber 8. At least one conduit interconnects the tanks 46, 46'. Thus, the tanks 46, 46' are communicating vessels. One of the tanks 46 is connected to water mains via an inlet valve 28 and a water softening device 29. Accordingly, freshwater may be tapped into the tanks 46, 46' from water mains.

A liquid connection 30 is adapted to transfer liquid from the reservoir 24 to the washing chamber 8. A return system 32 is adapted to transfer liquid from the washing chamber 8 to at least one of the tanks 46, 46' of the reservoir 24. The return system 32 comprises a first conduit 34 extending between the sump 14 and the reservoir 24. Thus, the first conduit 34 may be arranged to transfer washing liquid from the washing chamber 8 and its sump 14 to the reservoir 24.

A first control valve 36 is provided in the liquid connection 30. A second control valve **48** is provided in the first conduit 34. A third control valve 50 is provided in the circulation circuit 16. Again, valves and pumps are controlled by the controller 42.

The first and second control valves 36, 48 are closed when freshwater is tapped into the reservoir 24. The first control valve 36 is opened to transfer water from the reservoir 24 to the circulation circuit 16. The second control valve 48 is opened to transfer washing liquid from the washing chamber 8 to the reservoir 24. The first control valve 36 is closed to hold washing liquid in the reservoir 24. The first control valve 36 is opened to transfer washing liquid from the reservoir 24 to the circulation circuit 16. During circulation of the washing liquid in the circulation circuit 16, the third control valve 50 is open and the second control valve 48 is closed. Again, liquid is disposed of from the washing chamber 8 via a drain comprising a drain pump 38 connected to the sump 14.

Accordingly, the dishwasher 2 is adapted to store washing liquid in the reservoir 24. For instance washing liquid from a final washing cycle of a dishwashing operation, i.e. rinsing liquid, may be stored in the reservoir 24. This washing liquid is then used in a first washing cycle of a following dishwashing operation.

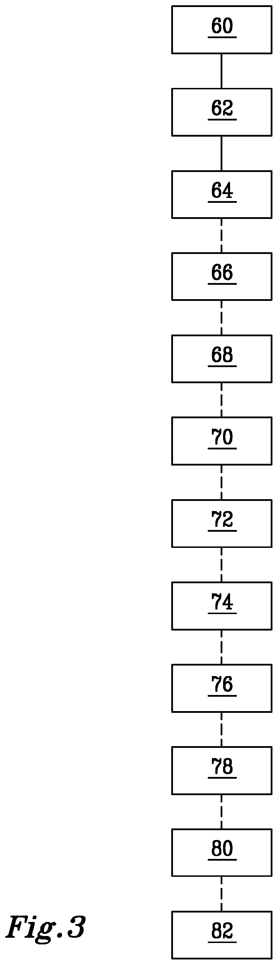

**Fig. 3** illustrates a method of operating a dishwasher. The dishwasher is a dishwasher according to embodiments discussed in connection with Figs. 1 and 2. The dishwasher comprises a reservoir for freshwater and washing liquid, which reservoir is thermally insulated from a washing chamber of the dishwasher. In the invention, the reservoir comprises two or more tanks arranged adjacent to one or more wall portions of the washing chamber.

The method comprises:
circulating **60** washing liquid in a circulation circuit of the dishwasher,
tapping **62** freshwater from water mains into the reservoir, and
heating **64** a washing liquid circulating in the circulation circuit without a washing liquid temperature being affected by a water temperature of the freshwater in the reservoir.

The method may further comprise:
transferring **66** washing liquid from the washing chamber to the reservoir, and
storing **68** the washing liquid in the reservoir. These steps may suitably be performed as last steps of a dishwashing operation, i.e. the washing liquid used during a last rinsing of dishes in the dishwasher is stored in the reservoir. The stored washing liquid may be used as a washing liquid in a first washing cycle of a following dishwashing operation. In this manner water may be save.

The method may further comprise:
transferring **70** washing liquid stored in the reservoir to the washing chamber,
utilizing **72** transferred washing liquid in a first washing cycle in the dishwasher,
tapping **74** freshwater from water mains into the reservoir,
transferring **76** at least part of the freshwater from the reservoir to the washing chamber, and
utilizing **78** the said at least part of the freshwater in a following washing cycle following the first washing cycle. A following washing cycle may be a washing cycle immediately following the first washing cycle, or it may be a later washing cycle, i.e. one or more washing cycles may be performed between the first washing cycle and the following washing cycle.

The method may further comprise:
repeating **80** tapping freshwater from water mains into the reservoir and transferring the freshwater from the reservoir to the washing chamber, one or more times, and
utilizing **82** at least part of the freshwater in one or more further washing cycles.

In this manner the reservoir is rinsed by freshwater between each storing 68 of washing liquid in the reservoir. Thus, the reservoir is thoroughly cleaned between each storing 68 of washing liquid and bacterial growth in the reservoir is prevented or at least reduced. If in the alternative, freshwater would not pass the reservoir on its way to the washing chamber separate measures might be required for cleaning the reservoir, at least from time to time.

The different washing cycles performed during a dishwashing operation may be the following: The first washing cycle - a pre-rinse of dishes, the second washing cycle - a main wash of the dishes, the third washing cycle - a cold rinse of the dishes, and the fourth washing cycle - a hot rinse of the dishes. Washing liquid used in two upon each other following washing cycles may be the same, or freshwater may be added to in a second washing cycle of the two washing cycles, or at least part of the washing liquid may be exchanged for freshwater in a second washing cycle of the two washing cycles.

Accordingly, a dishwasher 2 according to embodiments discussed in connection with Figs. 1 and 2, is:
adapted to transfer washing liquid stored in the reservoir to the washing chamber,
adapted to utilize transferred washing liquid in a first washing cycle in the dishwasher,
adapted to tap freshwater from water mains into the reservoir,
adapted to transfer at least part of the freshwater from the reservoir to the washing chamber, and
adapted to utilize the said at least part of the freshwater in a following washing cycle following the first washing cycle.

Furthermore, such a dishwasher 2 may be:
adapted to repeat tapping freshwater from water mains into the reservoir and transferring the freshwater from the reservoir to the washing chamber, one or more times, and
adapted to utilize at least part of the freshwater in one or more further washing cycles.

The tanks may be arranged adjacent to different wall portions 6, 6' of the washing chamber 8, e.g. one tank adjacent to a side wall portion and one tank adjacent to a bottom wall portion. If required for a particular washing cycle, stored washing liquid or stored freshwater transferred from the reservoir 24 to the washing chamber 8 and the circulation circuit 16 may be topped of with fresh water from water mains. The controller 42 may comprise one or more microcontrollers and a memory. The controller 42 may comprise one or more controllers adapted to control different parts or processes in the dishwasher 2.

Alternatively, in a non-claimed embodiment, the method discussed in connection with Fig. 3 may be performed in a dishwasher 2 discussed herein, in which dishwasher no particular measures have been taken to thermally insulate the reservoir 24 from the washing chamber 8. The reservoir 24 may even be in thermal communication with the washing chamber 8. In the latter case the step: heating **64** a washing liquid circulating in the circulation circuit without a washing liquid temperature being affected by a water temperature of the freshwater in the reservoir, of the method is instead reduced to a corresponding step, namely only: heating **64** a washing liquid circulating in the circulation circuit.

## Claims

1. A dishwasher (2) comprising a washing chamber (8) with a sump (14) and a circulation circuit (16), the circulation circuit (16) comprising the sump (14), a circulation pump (18) and a spraying device (20) for spraying washing liquid into the washing chamber (8), the dishwasher (2) further comprising a reservoir (24) adapted to be connected to fresh water mains, wherein a liquid connection (30) is adapted to transfer liquid from the reservoir (24) to the washing chamber (8), and wherein a return system (32) is adapted to transfer liquid from the washing chamber (8) to the reservoir (24),
**characterized in that**
the reservoir (24) is thermally insulated from the washing chamber (8), wherein the reservoir (24) comprises two or more tanks (46, 46') arranged adjacent to one or more wall portions (6, 6') of the washing chamber (8).

2. The dishwasher (2) according to claim 1, wherein a thermal insulation material (26) is arranged between the reservoir (24) and the wall portion (6, 6').

3. The dishwasher (2) according to claim 1 or 2, comprising a heating element (40) arranged in thermal communication with the circulation circuit (16).

4. The dishwasher (2) according to claim 3, comprising a controller (42) for controlling washing parameters of the dishwasher (2), wherein the controller (42) is connected to the heating element (40) and a temperature sensor (44) for controlling a temperature of a washing liquid in the washing chamber (8).

5. The dishwasher (2) according to any one of the preceding claims, wherein the return system (32) comprises the circulation pump (18).

6. The dishwasher (2) according to any one of the preceding claims, wherein the return system (32) comprises a first conduit (34) extending between the sump (14) and the reservoir (24).

7. The dishwasher (2) according to any one of the preceding claims, wherein the dishwasher (2) is adapted to store washing liquid in the reservoir (24).

8. The dishwasher (2) according to claim 7, wherein the dishwasher (2) is: adapted to transfer washing liquid stored in the reservoir (24) to the washing chamber (8), adapted to utilize transferred washing liquid in a first washing cycle in the dishwasher (2), adapted to tap freshwater from fresh water mains into the reservoir (24), adapted to transfer at least part of the freshwater from the reservoir (24) to the washing chamber (8), and adapted to utilize said at least part of the freshwater in a following washing cycle following the first washing cycle.

9. The dishwasher (2) according to claim 8, wherein the dishwasher (2) is: adapted to repeat tapping freshwater from fresh water mains into the reservoir (24) and transferring the freshwater from the reservoir (24) to the washing chamber (8), one or more times, and adapted to utilize the freshwater in one or more further washing cycles.

10. The dishwasher (2) according to any one of the preceding claims, wherein the reservoir (24) is in thermal communication with an ambient environment of the dishwasher (2).

11. A method of operating a dishwasher, the dishwasher comprising a washing chamber with a sump, and a circulation circuit comprising the sump, a circulation pump, and a spraying device for spraying washing liquid into the washing chamber, a heating element being arranged in thermal communication with the circulation circuit, the dishwasher further comprising a reservoir adapted to be connected to fresh water mains, the reservoir being thermally insulated from the washing chamber and comprises two or more tanks arranged adjacent to one or more wall portions of the washing chamber, wherein a liquid connection is adapted to transfer liquid from the reservoir to the washing chamber, and wherein a return system is adapted to transfer liquid from the washing chamber to the reservoir, the method comprising:
circulating (60) washing liquid in the circulation circuit,
tapping (62) freshwater from fresh water mains into the reservoir, and
heating (64) the washing liquid circulating in the circulation circuit without a washing liquid temperature being affected by a water temperature of the freshwater in the reservoir.

## Patentansprüche

1. Geschirrspülmaschine (2), umfassend eine Waschkammer (8) mit einem Sumpf (14) und einen Umwälzkreislauf (16), wobei der Umwälzkreislauf (16) den Sumpf (14), eine Umwälzpumpe (18) und eine Sprühvorrichtung (20) zum Sprühen von Waschflüssigkeit in die Waschkammer (8) umfasst, wobei die Geschirrspülmaschine (2) ferner einen Behälter (24) umfasst, der dazu angepasst ist, mit einer Frischwasserleitung verbunden zu werden, wobei eine Flüssigkeitsverbindung (30) dazu angepasst ist, Flüssigkeit vom Behälter (24) in die Waschkammer (8) zu transferieren und wobei ein Rückführungssystem (32) dazu angepasst ist, Flüssigkeit von der Waschkammer (8) zum Behälter (24) zurückzuführen,
**dadurch gekennzeichnet, dass** der Behälter (24) thermisch von der Waschkammer (8) isoliert ist,
wobei der Behälter (24) zwei oder mehr Tanks (46, 46') umfasst, die angrenzend an einen oder mehrere Wandteile (6, 6') der Waschkammer (8) angeordnet sind.

2. Geschirrspülmaschine (2) nach Anspruch 1, wobei ein thermisches Isoliermaterial (26) zwischen dem Behälter (24) und dem Wandteil (6, 6') angeordnet ist.

3. Geschirrspülmaschine (2) nach Anspruch 1 oder 2, umfassend ein Heizelement (40), angeordnet in thermischer Verbindung mit dem Umwälzkreislauf (16).

4. Geschirrspülmaschine (2) nach Anspruch 3, umfassend eine Steuerung (42) zum Steuern von Waschparametern der Geschirrspülmaschine (2), wobei die Steuerung (42) mit dem Heizelement (40) und einem Temperatursensor (44) verbunden ist, um eine Temperatur einer Waschflüssigkeit in der Waschkammer (8) zu steuern.

5. Geschirrspülmaschine (2) nach einem der vorhergehenden Ansprüche, wobei das Rückführungssystem (32) die Umwälzpumpe (18) umfasst.

6. Geschirrspülmaschine (2) nach einem der vorhergehenden Ansprüche, wobei das Rückführungssystem (32) eine erste Leitung (34) umfasst, die sich zwischen dem Sumpf (14) und dem Behälter (24) erstreckt.

7. Geschirrspülmaschine (2) nach einem der vorhergehenden Ansprüche, wobei die Geschirrspülmaschine (2) dazu angepasst ist, Waschflüssigkeit im Behälter (24) zu speichern.

8. Geschirrspülmaschine (2) nach Anspruch 7, wobei die Geschirrspülmaschine (2): dazu angepasst ist, im Behälter (24) gespeicherte Waschflüssigkeit in die Waschkammer (8) zu transferieren, dazu angepasst ist, transferierte Waschflüssigkeit in einem ersten Waschzyklus in der Geschirrspülmaschine (2) zu nutzen, dazu angepasst ist, Frischwasser von der Frischwasserhauptleitung in den Behälter (24) abzuzapfen, dazu angepasst ist, zumindest einen Teil des Frischwassers vom Behälter (24) in die Waschkammer (8) zu transferieren, und dazu angepasst ist, den zumindest einen Teil des Frischwassers in einem folgenden Waschzyklus im Anschluss an den ersten Waschzyklus zu nutzen.

9. Geschirrspülmaschine (2) nach Anspruch 8, wobei die Geschirrspülmaschine (2): dazu angepasst ist, das Abzapfen von Frischwasser der Frischwasserhauptleitung in den Behälter (24) und das Transferieren des Frischwassers vom Behälter (24) in die Waschkammer (8) einmal oder mehrere Male zu wiederholen, und dazu angepasst ist, das Frischwasser in einem oder mehreren weiteren Waschzyklen zu nutzen.

10. Geschirrspülmaschine (2) nach einem der vorhergehenden Ansprüche, wobei der Behälter (24) in thermischer Verbindung mit einer umgebenden Umgebung der Geschirrspülmaschine (2) ist.

11. Verfahren zum Betreiben einer Geschirrspülmaschine, wobei die Geschirrspülmaschine eine Waschkammer mit einem Sumpf, und einen Umwälzkreislauf, umfassend den Sumpf, eine Umwälzpumpe und eine Sprühvorrichtung zum Sprühen von Waschflüssigkeit in die Waschkammer umfasst, wobei ein Heizelement in thermischer Verbindung mit dem Umwälzkreislauf angeordnet ist, wobei die Geschirrspülmaschine ferner einen Behälter umfasst, der dazu angepasst ist, mit einer Frischwasserhauptleitung verbunden zu werden, wobei der Behälter thermisch von der Waschkammer isoliert ist und zwei oder mehre Tanks umfasst, die angrenzend an einen oder mehrere Wandteile der Waschkammer angeordnet sind, wobei eine Flüssigkeitsverbindung dazu angepasst ist, Flüssigkeit vom Behälter zur Waschkammer zu transferieren, und wobei ein Rückführungssystem dazu angepasst ist, Flüssigkeit von der Waschkammer zum Behälter zu transferieren, wobei das Verfahren Folgendes umfasst:
Umwälzen (60) von Waschflüssigkeit im Umwälzkreislauf, Abzapfen (62) von Frischwasser von der Frischwasserhauptleitung in den Behälter, und
Heizen (64) der Waschflüssigkeit, die im Umwälzkreislauf zirkuliert, ohne dass eine Waschflüssigkeitstemperatur durch eine Wassertemperatur des Frischwassers im Behälter beeinflusst wird.

## Revendications

1. Lave-vaisselle (2) comprenant une chambre de lavage (8) avec un puisard (14) et un circuit de circulation (16), le circuit de circulation (16) comprenant le puisard (14), une pompe de circulation (18) et un dispositif pulvérisation (20) pour pulvériser du liquide de lavage dans la chambre de lavage (8), le lave-vaisselle (2) comprenant en outre un réservoir (24) conçu pour être raccordé à la conduite principale d'alimentation en eau douce, dans lequel un raccordement de liquide (30) est conçu pour transférer du liquide du réservoir (24) à la chambre de lavage (8), et dans lequel un système de retour (32) est conçu pour transférer du liquide de la chambre de lavage (8) au réservoir (24), **caractérisé en ce que** le réservoir (24) est thermiquement isolé de la chambre de lavage (8), le réservoir (24) comprenant deux réservoirs ou plus (46, 46') agencés de manière adjacente à une ou plusieurs portions de paroi (6, 6') de la chambre de lavage (8).

2. Lave-vaisselle (2) selon la revendication 1, dans lequel un matériau d'isolation thermique (26) est agencé entre le réservoir (24) et la portion de paroi (6, 6').

3. Lave-vaisselle (2) selon la revendication 1 ou la revendication 2, comprenant un élément de chauffage (40) agencé en communication thermique avec le circuit de circulation (16).

4. Lave-vaisselle (2) selon la revendication 3, comprenant un régulateur (42) pour réguler les paramètres de lavage du lave-vaisselle (2), le régulateur (42) étant raccordé à l'élément de chauffage (40) et un capteur de température (44) pour réguler une température d'un liquide de lavage dans la chambre de lavage (8).

5. Lave-vaisselle (2) selon l'une quelconque des revendications précédentes, dans lequel le système de retour (32) comprend la pompe de circulation (18).

6. Lave-vaisselle (2) selon l'une quelconque des revendications précédentes, dans lequel le système de retour (32) comprend un premier conduit (34) s'étendant entre le puisard (14) et le réservoir (24).

7. Lave-vaisselle (2) selon l'une quelconque des revendications précédentes, dans lequel le lave-vaisselle (2) est conçu pour stocker du liquide de lavage dans le réservoir (24).

8. Lave-vaisselle (2) selon la revendication 7, le lave-vaisselle (2) étant : conçu pour transférer du liquide de lavage stocké dans le réservoir (24) à la chambre de lavage (8), conçu pour utiliser le liquide de lavage transféré dans un premier cycle de lavage dans le lave-vaisselle (2), conçu pour tirer de l'eau douce d'une conduite principale d'alimentation en eau douce jusque dans le réservoir (24), conçu pour transférer au mois une partie de l'eau douce du réservoir (24) à la chambre de lavage (8), et conçu pour utiliser ladite au moins une portion de l'eau douce dans un prochain cycle de lavage suivant le premier cycle de lavage.

9. Lave-vaisselle (2) selon la revendication 8, le lave-vaisselle (2) étant : conçu pour réitérer le tirage de l'eau douce d'une conduite principale d'alimentation en eau douce jusque dans le réservoir (24) et transférer l'eau douce du réservoir (24) à la chambre de lavage (8), une ou plusieurs fois, et conçu pour utiliser l'eau douce lors d'un ou plusieurs prochains cycles de lavages.

10. Lave-vaisselle (2) selon l'une quelconque des revendications précédentes, dans lequel le réservoir (24) est en communication thermique avec un environnement ambiant du lave-vaisselle (2).

11. Procédé d'actionnement d'un lave-vaisselle, le lave-vaisselle comprenant une chambre de lavage avec un puisard, et un circuit de circulation comprenant le puisard, une pompe de circulation, et un dispositif de pulvérisation pour pulvériser le liquide de lavage dans la chambre de lavage, un élément de chauffage étant agencé en communication thermique avec le circuit de circulation, le lave-vaisselle comprenant en outre un réservoir conçu pour être raccordé à une conduite principale d'alimentation en eau douce, le réservoir étant thermiquement isolé de la chambre de lavage et comprenant deux réservoirs ou plus agencés de manière adjacente à une ou plusieurs portions de paroi de la chambre de lavage, dans lequel un raccordement de liquide est conçu pour transférer du liquide du réservoir à la chambre de lavage, et dans lequel un système de retour est conçu pour transférer du liquide de la chambre de lavage au réservoir, le procédé comprenant :
la circulation (60) du liquide de lavage dans le circuit de circulation,
le tirage (62) de l'eau douce d'une conduite principale d'alimentation en eau douce jusque dans le réservoir, et
le chauffage (64) du liquide de lavage circulant dans le circuit de circulation sans que la température du liquide de lavage ne soit affectée par une température d'eau de l'eau douce dans le réservoir.
